# EUROPÄISCHE PATENTSCHRIFT

(11) **EP 0 425 998 B1**
(45) Veröffentlichungstag und Bekanntmachung des Hinweises auf die Patenterteilung: **28.12.1994**
(21) Anmeldenummer: 90120416.4
(22) Anmeldetag: 24.10.1990
(51) Int. Cl.: C03B 27/044, C03B 29/08, F27D 23/00

(54) **Rückblassperre**
Blow-back barrier
Barrière pour empêcher des coups en arrière

(30) Priorität: 27.10.1989 DE 3935926
(43) Veröffentlichungstag der Anmeldung: 08.05.1991
(73) Patentinhaber: WSP INGENIEURGESELLSCHAFT FÜR WÄRMETECHNIK, STRÖMUNGSTECHNIK UND PROZESSTECHNIK MIT BESCHRÄNKTER HAFTUNG, 52074 Aachen (DE)
(72) Erfinder: Kramer, Carl, Prof. Dr.-Ing., W-5100 Aachen (DE)
(74) Vertreter: Marx, Lothar, Dr.

(56) Entgegenhaltungen:
- WO-A-88/01715
- FR-A- 2 402 174
- GB-A- 2 094 290
- US-A- 4 781 747

## Beschreibung

Die Erfindung betrifft eine Rückblassperre zwischen der Begrenzung eines Hochkonvektions-Düsenfeldes und anderen Bereichen einer Vorrichtung zur Beblasung einer Materialbahn.

Bei vielen Einrichtungen aus dem Bereich der Thermoprozeßtechnik, in denen zumeist flächenhafte Güter, z.B. Bänder, Platten oder Tafeln, im folgenden als "Materialbahn" bezeichnet, mit Gasstrahlen beblasen werden, um eine Wärmebehandlung durchzuführen, aber auch einen Stoffaustausch zu bewirken, muß das Einblasen von Gas aus einer Zone mit besonders intensiver Beblasung, wie z.B. aus einer Kühlzone, in einen angrenzenden Bereich mit weniger intensiver Beblasung, z.B. eine Heizzone, verhindert werden. Typische Anwendungen für solche Rückblassperren finden sich bei Durchlauftrocknern, bei denen die Vermischung von Kühlzonenatmosphäre, in der Regel Luft, mit der Trockneratmosphäre vermieden werden muß, die Lösungsmitteldampf enthält, da sonst das Lösungsmittel im Innern der Kühlzone kondensieren kann. Umgekehrt darf auch kein Austausch von der Kühlzone zur Heizzone stattfinden.

Besonders störend ist dieses Rückblasen bei Anlagen zum thermischen Vorspannen von Einscheiben-Sicherheitsglas, bei denen die Glasscheiben auf Rollen geführt, in einem - meist nur durch Strahlung beheizten - Ofen auf Erweichungstemperatur erwärmt und anschließend von oberhalb und unterhalb des Rollenganges angeordneten Luftdüsen derart rasch kaltgeblasen werden daß sich die gewünschte Vorspannung zwischen dem Kern und der Oberfläche der Scheibe einstellt. Da mit abnehmender Dicke der Glasscheibe der hierzu erforderliche Wärmeübergang ansteigt und dieser Wärmeübergang nur durch eine stark überproportionale Erhöhung der Kühlluft-Geschwindigkeit erreicht werden kann, spielt die zuverlässige Vermeidung des Rückblasens aus der Kühlstrecke in den Ofen insbesondere für geringe Glasstärken von weniger als etwa 4 mm eine große Rolle.

Die beim Rückblasen in den Ofen eintretende Kühlluft verursacht nämlich an den noch im Ofen befindlichen Teilen der Glasscheibe eine Vorkühlung, die sich bei dünnem Glas und hoher Düsenaustrittsgeschwindigkeit, also auch entsprechend kräftigerem Rückblasen stärker auswirkt als bei dickerem Glas, das nur erheblich geringere Düsenaustrittsgeschwindigkeiten erfordert.

Diese Vorkühlung verringert die Scheibentemperatur und damit auch die die Vorspannung erzeugende Temperatur-Differenz zwischen dem Kern und der Oberfläche der Glasscheibe, und zwar in Transportrichtung der Glasscheibe in unterschiedlichem Maße entsprechend der unterschiedlichen Vorkühlzeit, bspw. am Anfang und in der Mitte der Scheibe. Da die Vorkühlung außerdem noch wegen der unter der Glasscheibe befindlichen Rollen an der Oberseite der Glasscheibe einerseits und an der Unterseite der Glasscheibe andererseits unterschiedlich ist, ergeben sich als weitere Nachteile noch Deformationen der Glasscheibe, die sogenannte "Bogenbildung" oder "Bistabilität".

Diesen Nachteilen versucht man durch höhere Glasscheiben-Temperatur abzuhelfen; insbesondere bei dünnem Glas führt dies jedoch zu einer schlechteren Optik, weil die nur linienhafte Unterstützung der Glasscheibe durch die Ofenrollen bei höheren Temperaturen und entsprechend weicherer Glasscheibe eine größere Welligkeit verursacht.

Eine weitere Möglichkeit besteht darin, die Wirkung der Vorkühlung durch hohe Transportgeschwindigkeit der Glasscheibe aus dem Ofen in die Kühlstrecke hinein abzuschwächen. Dies erfordert jedoch insbesondere bei Durchlaufanlagen längere Vorspannkühlzonen, da die Verweildauer der Glasscheibe in der Zone hoher Abkühlung nicht unter einen vorgegebenen, kritischen Wert verkürzt werden darf.

Aus diesen technischen Gegebenheiten wird verständlich, daß die Einsatzmöglichkeiten von Vorspannanlagen durch das Phänomen des Rückblasens von der Vorspannstrecke in den Ofen begrenzt sind. Dies gilt speziell für Anlagen zum Vorspannen von großen, dünnen Bauglasscheiben, für die eine ständig steigende Nachfrage besteht.

Als konstruktive Maßnahmen zur Vermeidung des Rückblasens sind bisher, falls überhaupt spezielle Vorkehrungen getroffen worden, nur Vorhänge oder Schieber vorgeschlagen worden, mit denen die Austrittsöffnung des Ofens auf das notwendige Mindestmaß verringert wird. Diese Schieber haben jedoch den großen Nachteil, daß sie einer extrem einseitigen Temperaturbelastung ausgesetzt sind und deshalb starkem Verschleiß und auch Verzug unterliegen; außerdem ist ein einzelner Schieber oder ein einzelner Vorhang kaum in der Lage, die sich an der Glasscheibe ausbildene Grenzschichtströmung von der Glasscheibe abzulösen und damit das Rückblasen nennenswert zu verringern.

Als weitere konstruktive Maßnahmen kommen sogenannte "Sperrdüsen" in Frage, also Schlitzdüsen, die in Durchlaufrichtung gegen die Glasoberfläche geneigt sind und durch ihren Strömungsimpuls in Glastransportrichtung ein Abströmen von Vorspannluft in umgekehrter Richtung, also in den Ofen hinein, verhindern sollen. Diese Sperrstrahlen verursachen jedoch im Gas eine Tangentialströmung, die sich der nachfolgenden, den hohen Wärmeübergang erzeugenden Prallströmung überlagert. Die Überlagerung einer Tangentialströmung mit einer Prallströmung führt jedoch immer dann, wenn die Strömungsgeschwindigkeit der Tangentialströmung niedriger ist als die Ankunftsgeschwindigkeit der Prallströmung auf der zu kühlenden Fläche, was hier der Fall ist, zu einer Verringerung des Wärmeübergangskoeffizienten. Daher wird bei dieser Art von Rückblassperre der erzielte Vorteil, nämlich die Verringerung des Rückblasens, durch einen gravierenden Nachteil erkauft, nämlich die Verringerung des anfänglichen Wärmeübergangs.

Eine ähnliche Vorrichtung geht aus der FR-A-2402174 hervor, bei der nur ein von unten nach oben gerichteter Sperrstrahl und eine gegenüberliegende Absaugöffnung vorgesehen sind; der erwähnte Nachteil, nämlich die Ausbildung einer Tangentialströmung am Gut und die Überlagerung der Prallströmung mit einer Tangentialströmung, besteht aber auch hier zumindest für die Gutunterseite.

Ein weiterer Nachteil einer solchen Rückblassperre ist schließlich noch, daß sich ihre Funktionsweise ändert, und zwar in Abhängigkeit davon, ob sich eine Glasscheibe zwischem dem oberen und dem unteren Vorspanndüsenfeld befindet oder nicht. Arbeitet ein solches Sperrstrahlensystem bei Anwesenheit einer Glasscheibe einwandfrei, so kommt es ohne Glasscheibe, also bspw. bei den Lücken zwischen zwei hintereinander antransportierten Glasscheiben, zu einem verstärkten Luftaustausch mit dem Ofen, der sich wiederum äußerst störend auf die Temperaturregelung des Ofens auswirken kann.

Schließlich geht aus der US-A-4781747 eine Rückblassperre hervor, die ein Gehäuse mit zwei Gehäusebereichen enthält, die zwei Saugkammern definieren, die über einer Auslaßöffnung eines Glasheizofens angebracht sind. An jede Saugkammer ist ein Gebläse angeschlossen, um das verbrauchte Kühlgas durch Schlitzbereiche in die Saugkammer zu saugen und dieses Gas weg von der Auslaßöffnung des Ofens nach außen abzugeben um Temperaturschwankungen in dem Ofen zu vermeiden, die dann auftreten könnten, wenn das Kühlgas in den Ofen eindringt.

Der Erfindung liegt die Aufgabe zugrunde, eine Rückblassperre der angegebenen Gattung zu schaffen, bei der die oben erwähnten Nachteile nicht auftreten. Insbesondere soll eine Rückblassperre vorgeschlagen werden, die auf konstruktiv sehr einfache Weise das unerwünschte Einblasen einer Gasströmung aus dem Hochkonvektions-Düsenfeld einer Vorrichtung zur Beblasung einer Materialbahn in andere Bereiche verhindert.

Dies wird erfindungsgemäß durch die im kennzeichnenden Teil des Anspruchs 1 angegebenen Merkmale erreicht.

Zweckmäßige Ausführungsformen dieser Rückblassperre werden durch die Merkmale der Unteransprüche definiert.

Die mit der Erfindung erzielten Vorteile beruhen darauf daß ein Leitschaufelsystem aus einfach geformten, zur Oberfläche der Materialbahn hin mehr oder weniger gekrümmten dünnen Schaufeln, z. B. einfachen Blechschaufeln, oberhalb und unterhalb der Materialbahn, insbesondere einer Glasscheibe, angeordnet wird. Durch dieses lamellenartige Leitschaufelsystem wird der an der Materialbahn entlang strömende Rückblasstrom kontinuierlich verzögert und auf beiden Seiten der Materialbahn senkrecht zu ihrer Oberfläche abgelenkt.

Bei der Anwendung einer solchen Rückblassperre für eine Glas-Vorspannanlage genügt die Anordnung dieser Leitschaufeln im Bereich einer Transportrollenteilung zwischen Ofen und Vorspannstrecke, um das Einblasen der Gasströmung aus der Vorspannstrecke in den Ofen zu verhindern.

Die Erfindung wird im folgenden anhand von Ausführungsbeispielen unter Bezugnahme auf die beiliegenden, schematischen Zeichnungen näher erläutert. Es zeigen
- Fig. 1: eine perspektivische Ansicht eines Abschnittes einer Vorspannstrecke für Glasscheiben unmittelbar am Ausgang des Ofens, aus der die Gestaltung und räumliche Anordnung der Rückblassperre zwischen Vorspann-Düsenfeld und Ofen ersichtlich ist,
- Fig. 2: einen schematischen Längsschnitt durch die Rückblassperre nach Figur 1, und
- Fig. 3: eine Kurvendarstellung des mittels eines Strahlungs-Pyrometers, dessen Anordnung aus Figur 1 ersichtlich ist, gemessenen Temperaturverlaufs entlang einer Glasscheibe, und zwar jeweils mit Rückblassperre und ohne Rückblassperre.

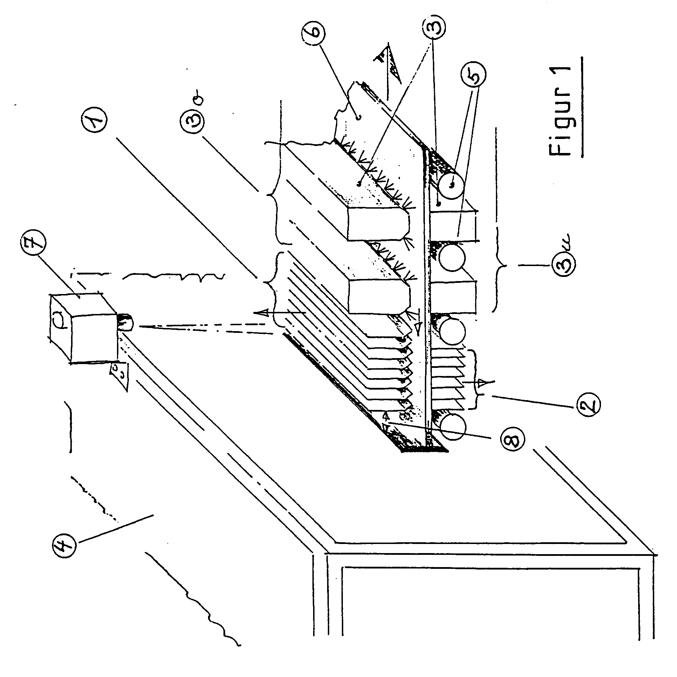

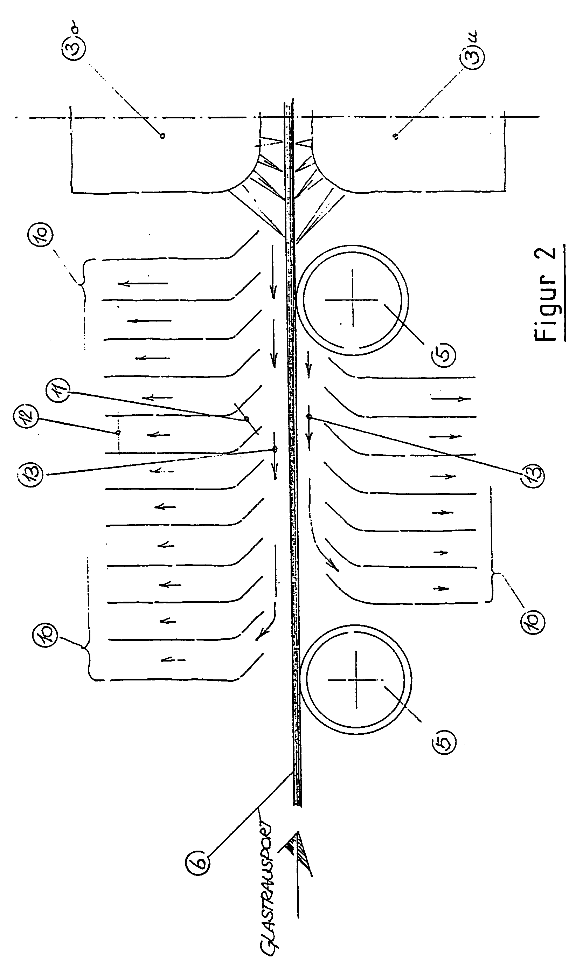

Figur 1 zeigt den hier interessierenden Teil einer Anlage zum Vorspannen von planem Einscheiben-Sicherheitsglas, nämlich einer Glasscheibe 6, die, gestützt und transportiert von angetriebenen Rollen 5, aus einem Ofen 4 in eine Vorspannstrecke 3 gebracht wird. Diese Vorspannstrecke 3 weist ein oberes Düsensystem 3o und ein unteres Düsensystem 3u auf. Zur Vereinfachung der Darstellung ist der dem Stand der Technik entsprechende Antrieb für die Rollen 5 in den Figuren 1 und 2 nicht gezeigt.

Oberhalb und unterhalb des Transportweges der Glasscheibe 6 ist zwischen dem Ofen 4 und den Düsenfeldern der Vorspannstrecke 3 eine lamellenartige Anordnung von Leitschaufeln 1 (über der Glasscheibe 6) und 2 (unter der Glasscheibe 6) vorgesehen. Der für diese Rückblassperre erforderliche Einbauraum entspricht lediglich einer Düsenteilung. Zwischen dieser Rückblassperre, nämlich den lamellenartigen Anordnungen von Leitschaufeln 1 und 2, einerseits und dem Ofen 4 andererseits verbleibt noch genügend Freiraum 8, um an dieser Stelle eine Temperaturmessung mittels eines Strahlungs-Pyrometers 7 zu ermöglichen.

Wie man insbesondere aus Figur 2 erkennt, werden die einzelnen Schaufeln 10 der lamellenartigen Anordnungen von Leitschaufeln 1 und 2 durch gebogene Blechschaufeln gebildet. Selbstverständlich können auch profilierte Leitschaufeln 10, die z.B. im Strangpreßverfahren hergestellt werden, Verwendung finden.

Bei dem aus Figur 2 ersichtlichen Längsschnitt durch eine Rückblassperre sind die aus Blechen hergestellten Leitschaufeln 10 oberhalb und unterhalb der Glasscheibe 6 baugleich und werden lediglich oben und unten seitenverkehrt montiert. Für die unterhalb der Glasscheibe 6 zwischen den Rollen 5 eingesetzte Rückblassperre werden weniger Leitschaufeln 10 verwendet als für die Rückblassperre oberhalb der Glasscheibe 6. Der Grund dafür ist, daß bereits durch die Rollen 5 das Rückblasen aus dem unteren Vorspann-Düsenfeld 3u im Vergleich mit der Situation oberhalb der Glasscheibe 6 reduziert ist.

Wenn die der Glasscheibe 6 zugewandte Vorderkante der lamellenartigen Leitschaufeln 10 entsprechend der Darstellung in Figur 2 in der durch den Pfeil angedeuteten Transportrichtung der Glasscheibe 6, also zur Vorspannstrecke 3o, 3u, hin gekrümmt ist, erweitert sich der Querschnitt des zwischen zwei Lamellen 10 gebildeten Strömungskanals vom Eintrittsquerschnitt 11 auf den Austrittsquerschnitt 12 (siehe Figur 2). Diese Erweitung bewirkt eine Verzögerung der Strömung und führt zu einer Erhöhung des statischen Druckes, bezogen auf den Umgebungsdruck im Raum 13, da der Außendruck dem Austrittsquerschnitt aufgeprägt wird. Wie man in Figur 2 erkennt, wird dieser Raum 13 von der Eintrittsfläche der Rückblassperre und der Glasscheibe 6 gebildet. Dadurch erweist sich die Rückblassperre als besonders effizient beim Abschälen der Rückblasströmung von der Glasscheibe 6.

Der auf die Rückblassperre zurückgehende Strömungsverlauf ist in Figuren 1 und 2 schematisch mit Hilfe von Strömungspfeilen angedeutet.

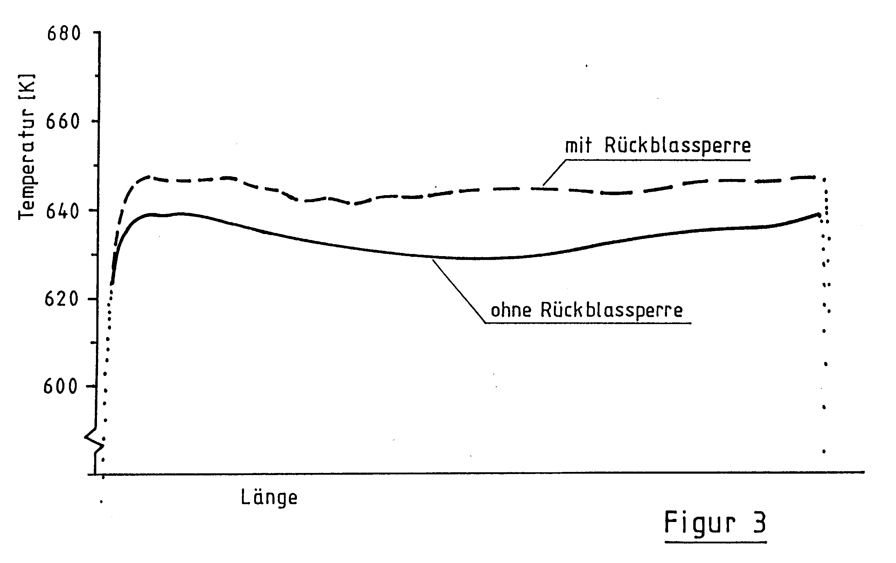

Die Wirksamkeit dieser Rückblassperre wird anhand des aus Figur 3 ersichtlichen Temperaturprofils erläutert, das in Längsrichtung über einer Glasscheibe 6 gemessen wurde. Bei Einsatz der Rückblassperre (obere Kurve) ergibt sich eine im Mittel um etwa 8 °K höhere Temperatur im Vergleich mit der Situation ohne Rückblassperre (unter Kurve). Außerdem ist die Temperaturverteilung ohne Rückblassperre ungleichmäßiger, da etwa in Scheibenmitte ein deutliches Temperaturminimum auftritt. Durch eine solche ungleichmäßige Temperaturverteilung wird der durch den Vorspanneffekt erzielten Glasspannung noch eine "Membranspannung" überlagert, die zu den besonders bei planem Sicherheitsglas auftretenden, äußert störenden Effekten der Verwölbung bzw. Bistabilität führt.

Die Einstellung des Ofens und der Vorspannstrecke war in beiden Fällen gleich; die beiden Kurven nach Figur 3 wurden mit einer Labor-Vorspannanlage im Technikums-Maßstab aufgenommen, die mit einer Rückblassperre nach Figur 2 versehen war.

## Patentansprüche

1. Rückblassperre zwischen der Begrenzung eines Hochkonvektions-Düsenfeldes einerseits und anderen Bereichen einer Vorrichtung zur Beblasung einer Materialbahn andererseits, **gekennzeichnet** durch die folgenden Merkmale:
a) oberhalb und/oder unterhalb der Materialbahn (6) ist eine Leitschaufelanordnung (1, 2, 10) vorgesehen, die aus mehreren, parallel zueinander verlaufenden, lamellenartigen Leitschaufeln (10) besteht; und
b) jeweils zwei benachbarte Leitschaufeln (10) jeder Leitschaufelanordnung (1, 2) bilden einen den Gasstrom von der Materialbahn (6) wegleitenden Strömungskanal (12),
c) so daß die dadurch hervorgerufene Verzögerung der Rückblasströmung und dadurch erzielte Erhöhung des statischen Drucks im Raum zwischen Leitschaufelanordnung (1, 2) und Materialbahn (6) in Verbindung mit der Umlenkwirkung durch den Vorderkantenbereich der Leitschaufeln den Rückblasstrom in die bzw. jede Leitschaufelanordnung (1, 2) ablenkt.

2. Rückblassperre nach Anspruch 1, dadurch gekennzeichnet, daß die lamellenartigen Leitschaufeln (10) im Bereich ihrer zur Materialbahn (6) hinweisenden Eintrittskante gekrümmt sind.

3. Rückblassperre nach einem der Ansprüche 1 oder 2, dadurch gekennzeichnet, daß die Leitschaufeln (10) profiliert sind.

4. Rückblassperre nach einem der Ansprüche 1 bis 3, dadurch gekennzeichnet, daß sich der Strömungskanal (12) in Abströmungsrichtung senkrecht von der Materialbahn (6) weg erweitert.

5. Rückblassperre nach Anspruch 4, dadurch gekennzeichnet, daß das Querschnitts-Erweiterungsverhältnis des Strömungskanals (12) etwa 2 beträgt.

6. Rückblassperre nach einem der Ansprüche 1 bis 5 für Anlagen zur Führung der Materialbahn auf Rollen, dadurch gekennzeichnet, daß die lamellanartigen Leitschaufelanordnungen (1, 2; 10) innerhalb einer Rollenteilung angebracht sind.

7. Rückblassperre nach Anspruch 6, dadurch gekennzeichnet, daß oberhalb der Materialbahn (6) mehr Leitschaufeln (10) angeordnet sind als unterhalb der Materialbahn (6).

8. Rückblassperre nach einem der Ansprüche 1 bis 7, dadurch gekennzeichnet, daß die Leitschaufeln (10) durch gebogene Blechschaufeln gebildet werden.

## Claims

1. Blow-back barrier between the boundary of a high convection nozzle field on the one hand and other areas of a device for directing a jet upon a material web on the other hand, characterised by the following features:
a) a guide vane assembly (1, 2, 10) is provided above and/or below the material web (6), said assembly consisting of a plurality of lamella-like guide vanes (10) extending parallel to each other; and
b) two adjacent guide vanes (10) each of every guide vane assembly (1, 2) form a flow channel (12) which guides the gas stream away from the material web (6),
c) so that the delay of the blow-back flow caused thereby and the resultant increase in the static pressure in the space between the guide vane assembly (1, 2) and the material web (6) in conjunction with the deflection effect achieved by the leading edge area of the guide vanes deflect the blow-back stream into the guide vane assembly (1, 2) or each guide vane assembly respectively.

2. Blow-back barrier according to claim 1 characterised in that the lamella-like guide vanes (10) are bent in the area of their leading edge pointing towards the material web (6).

3. Blow-back barrier according to one of the claims 1 or 2 characterised in that the lamella-like guide vanes (10) are are profiled.

4. Blow-back barrier according to one of the claims 1 to 3 characterised in that the flow channel (12) widens in the direction of flow vertically away from the material web (6).

5. Blow-back barrier according to claim 4 characterised in that the cross section windenig ratio of the flow channel (12) is approximately 2.

6. Blow-back barrier according to one of the claims 1 to 5 for facilities for guiding the material web on rollers, characterised in that the lamella-like guide vane assemblies (1, 2, 10) are mounted within one rollers pitch.

7. Blow-back barrier according to claim 6 characterised in that more guide vanes (10) are assembled above the material web (6) than below the material web (6).

8. Blow-back barrier according to one of the claims 1 to 7 characterised in that the guide vanes (10) are formed by bent or curved vanes made of sheet metal.

## Revendications

1. Barrière contre le soufflage en arrière entre la limite de la zone de tuyères à forte convection et les autres régions d'un dispositif pour le soufflage d'un matériau en bande, d'autre part, caractérisée par les caractéristiques suivantes:
a) au-dessus et/ou en-dessous du matériau en bande (6) est prévu un ensemble d'aubes de guidage (1, 2, 10), constitué de plusieurs aubes de guidage (10) en forme de lamelles et disposées parallèlement les unes aux autres; et
b) deux aubes de guidage voisines (10) de chaque ensemble d'aubes de guidage (1, 2) forment un passage d'écoulement (12) écartant le courant de gaz du matériau en bande (6);
c) si bien que le ralentissement ainsi provoqué de l'écoulement de soufflage en arrière et l'augmentation réalisée de cette manière de la pression statique dans l'espace entre l'ensemble des aubes de guidage (1, 2) et le matériau en bande (6) dévie le courant de soufflage en arrière dans le ou les ensembles d'aube de guidage (1, 2), en combinaison avec l'effet de déviation par la zone du bord antérieur des aubes de guidage.

2. Barrière contre le soufflage en arrière selon la revendication 1, caractérisée en ce que les aubes de guidage (10) en forme de lamelles sont incurvées dans la zone de leur bord d'entrée tourné vers le matériau en bande (6).

3. Barrière contre le soufflage en arrière selon l'une des revendications 1 ou 2, caractérisée en ce que les aubes de guidage (10) sont profilées.

4. Barrière contre le soufflage en arrière selon l'une des revendications 1 à 3, caractérisée en ce que le passage d'écoulement (12) s'élargit dans la direction d'écoulement perpendiculairement au matériau en bande (6).

5. Barrière contre le soufflage en arrière selon la revendication 4, caractérisée en ce que le rapport d'élargissement de section du passage d'écoulement (12) et égal à environ 2.

6. Barrière contre le soufflage en arrière selon l'une des revendications 1 à 5, pour installations pour guider un matériau en bande sur des rouleaux, caractérisée en ce que les ensembles d'aubes de guidage (1, 2, 10) en forme de lamelles sont disposés à l'intérieur d'un intervalle entre les rouleaux.

7. Barrière contre le soufflage en arrière selon la revendication 6, caractérisée en ce que plus d'aubes de guidage (10) sont disposées au-dessus du matériau en bande (6) qu'en dessous du matériau en bande (6).

8. Barrière contre le soufflage en arrière selon l'une des revendications 1 à 7, caractérisée en ce que les aubes de guidage (10) sont formées d'aubes en tôle cintrée.
